# EUROPEAN PATENT APPLICATION

(11) **EP 4 556 684 A1**
(43) Date of publication of application: **21.05.2025**
(21) Application number: 24213387.4
(22) Date of filing: 15.11.2024
(51) Int. Cl.: F01D 11/00

(54) **SLIDER SEAL FOR GAS TURBINE ENGINE**

(30) Priority: 15.11.2023 US 202318509529
(71) Applicant: RTX Corporation, Farmington, CT 06032 (US)
(72) Inventor: MURPHY, Michael, Farmington, 06032 (US)
(74) Representative: Dehns

(57) **Abstract**

A seal arrangement (78) of a gas turbine engine (20) includes a seal carrier (80), and at least one seal element (84, 86) secured at the seal carrier (80). The at least one seal element (84, 86) is formed from a moldable silicone rubber material configured for operation in temperature conditions equal to or greater than 500 degrees Fahrenheit. The at least one seal element (84, 86) is positioned and configured to minimize airflow leakage between a first component (64) and a second component (72) while preventing wear of the first component (64) and the second component (72).

## Description

### TECHNICAL FIELD

Exemplary embodiments of the present disclosure pertain to the art of gas turbine engines, and more particularly to seals around components that egress from an interior of the gas turbine engine.

### BACKGROUND

Gas turbine engines typically include one or more cases that at least partially define a flowpath of the gas turbine engine, and also at least partially define an exterior of the gas turbine engine. One or more components of the engine, such as tubes, shafts or the like, extend from an interior of a case to an exterior of the case through a case wall. Sealing of the case opening through which the component extends is necessary to maintain integrity of the flowpath of the engine. It is desired that any such seal allows for some relative movement of the case and the component during operation of the gas turbine engine, while also restricting leakage from the interior of the case.

### BRIEF DESCRIPTION

In one aspect of the present invention, a seal arrangement for a gas turbine engine includes a seal carrier, and at least one seal element secured at the seal carrier. The at least one seal element is formed from (or comprises) a moldable silicone rubber material configured for operation in temperature conditions equal to or greater than 500 degrees Fahrenheit (260°C). The at least one seal element is positioned and configured to minimize airflow leakage between a first component and a second component while preventing wear of the first component and the second component.

In embodiments of the above, the at least one seal element is configured to have an interference fit to one of the first component or the second component.

In embodiments of any of the above, the at least one seal element includes a first seal element formed from a composite material and secured to the seal carrier, and a second seal element secured to the first seal element. The second seal element is formed from the moldable silicone rubber material.

In embodiments of any of the above, the second seal element is positioned between two first seal elements.

In embodiments of any of the above, the at least one seal element includes a seal base secured to the first component, a seal tip secured to the second component, and a seal body extending between the seal base and the seal tip. The seal body includes a plurality of undulations extending along its length.

In embodiments of any of the above, a thickness of the at least one seal element varies (along the seal body).

In embodiments of any of the above, the at least one seal element is formed as a single unitary unbroken ring configured to extend around the second component.

In another aspect of the present invention, a case and tube arrangement of a gas turbine engine includes a case having one or more case openings extending therethrough from an exterior of the case to an interior of the case, a tube extending through a case opening of the one or more case openings, and a seal assembly to seal between the case and the tube at the case opening. The seal assembly includes a seal carrier secured to the case, and at least one seal element secured at the seal carrier. The at least one seal element is formed from (or comprises_ a moldable silicone rubber material configured for operation in temperature conditions equal to or greater than 500 degrees Fahrenheit (260°C). The at least one seal element extends between the case and the tube.

In embodiments of the above, the at least one seal element is configured to have an interference fit to the tube.

In embodiments of any of the above, the at least one seal element includes a first seal element formed from a composite material and secured to the seal carrier, and a second seal element secured to the first seal element. The second seal element is formed from the moldable silicone rubber material.

In embodiments of any of the above, the second seal element is positioned between two first seal elements.

In embodiments of any of the above, the at least one seal element includes a seal base secured to the case, a seal tip secured to the tube, and a seal body extending between the seal base and the seal tip. The seal body includes a plurality of undulations extending along its length.

In embodiments of any of the above, a thickness of the at least one seal element varies (along the seal body).

In embodiments of any of the above, the at least one seal element is formed as a single unitary unbroken ring configured to extend around the tube.

In yet another aspect of the present invention, a gas turbine engine includes a combustor configured to combust a mixture of air and fuel, a turbine driven by combustion products flowed from the combustor, and a case and tube arrangement including a case having one or more case openings extending therethrough from an exterior of the case to an interior of the case, a tube extending through a case opening of the one or more case openings, and a seal assembly to seal between the case and the tube at the case opening. The seal assembly includes a seal carrier secured to the case, and at least one seal element secured at the seal carrier. The at least one seal element is formed from (or comprises) a moldable silicone rubber material configured for operation in temperature conditions equal to or greater than 500 degrees Fahrenheit (260°C). The at least one seal element extends between the case and the tube.

In embodiments of the above, the at least one seal element is configured to have an interference fit to the tube.

In embodiments of any of the above, the at least one seal element includes a first seal element formed from a composite material and secured to the seal carrier, and a second seal element secured to the first seal element. The second seal element is formed from the moldable silicone rubber material.

In embodiments of any of the above, the second seal element is positioned between two first seal elements.

In embodiments of any of the above, the at least one seal element includes a seal base secured to the case, a seal tip secured to the tube, and a seal body extending between the seal base and the seal tip. The seal body includes a plurality of undulations extending along its length.

In embodiments of any of the above, the at least one seal element is formed as a single unitary unbroken ring configured to extend around the tube.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a cross-sectional view of an exemplary embodiment of a seal assembly of a gas turbine engine;
FIG. 3 is a cross-sectional view of another exemplary embodiment of a seal assembly of a gas turbine engine; and
FIG. 4 is a cross-sectional view of yet another exemplary embodiment of a seal assembly of a gas turbine engine.

### DETAILED DESCRIPTION

A detailed description of one or more embodiments of the disclosed apparatus and method are presented herein by way of exemplification and not limitation with reference to the Figures.

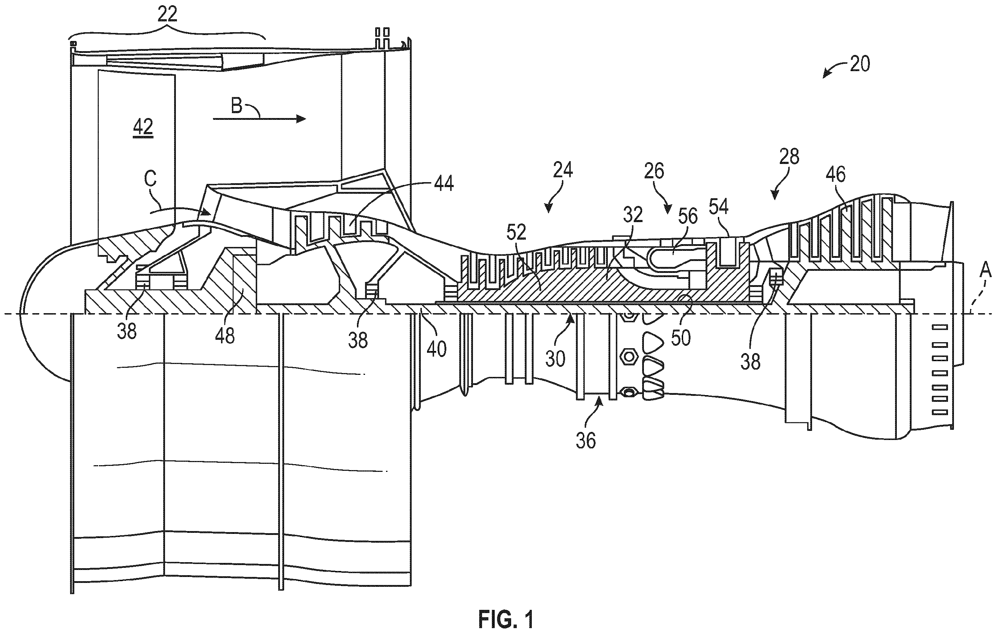

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of Ibm of fuel being burned divided by Ibf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

The engine 20 includes one or more cases enclosing portions of the engine 20. These cases may include, for example, a fan case 60, an intermediate case 62, a combustor case 64 and a turbine case 66. One skilled in the art will readily appreciate that the cases described herein are merely exemplary, and that other cases may be used. At least one of the cases includes one or more openings which allow for passage of a tube, line or electrical wiring or the like.

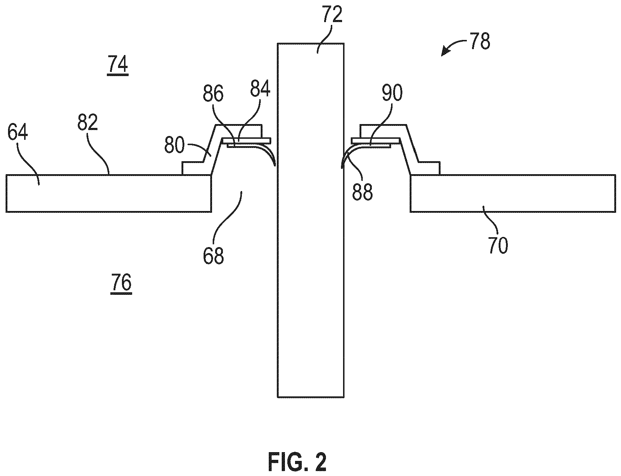

Referring now to FIG. 2, in one exemplary embodiment, the combustor case 64 includes a combustor case opening 68 in a combustor case wall 70 through which a tube 72, such as a fuel tube, is passed from a case exterior 74 into a case interior 76. In order to prevent undesired leakage of airflow around the tube 72 at the case opening 68, and also to prevent wear of the case opening 68 and/or the tube 72 due to relative movement of the tube 72 relative to the case opening 68, a seal assembly 78 is disposed at the case opening 68 to seal between the tube 72 and the case opening 68. While in the embodiment of FIG. 2, the seal assembly 78 is disposed at the case exterior 74, one skilled in the art will readily appreciate that this location is merely exemplary and that in other embodiments the seal assembly 78 may be located at the case interior 76 or in the case opening 68.

The seal assembly 78 includes a seal carrier 80 fixed to the combustor case wall 70 at, for example, a case wall outer surface 82. A first seal element 84, in the form of a composite ring or alternatively a metal ring, is secured to the seal carrier 80. In some embodiments, the first seal element 84 is a continuous unbroken ring that is positioned around the tube 72. Additionally, a second seal element 86 is secured to the first seal element 84. In some embodiments the second seal element 86 is ring shaped and includes a seal lip 88 extending from a seal base 90 such that, when the second seal element 86 is in the installed position, the seal lip 88 has an interference fit with the tube 72. In some embodiment, the second seal element 86 is a continuous, unitary, unbroken ring, but in other embodiments the second seal element 86 may be circumferentially segmented around the tube 72. The second seal element 86 is formed from a moldable silicone rubber material configured for operation in high temperature conditions. In some embodiments, the high temperature condition is an condition at a temperature of greater than 500 degrees Fahrenheit (260°C), or in the range of 500-750 degrees Fahrenheit (260-399°C).

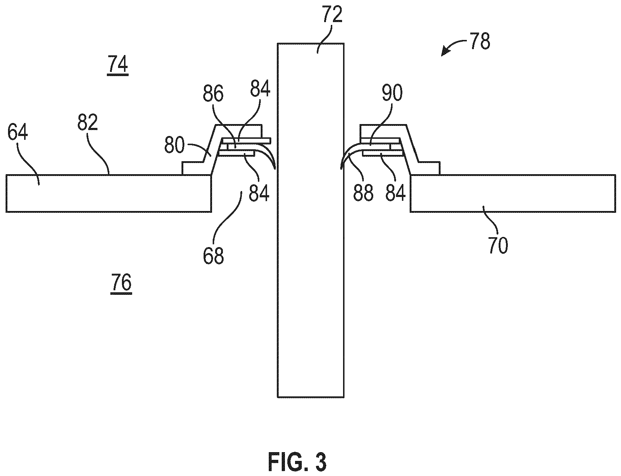

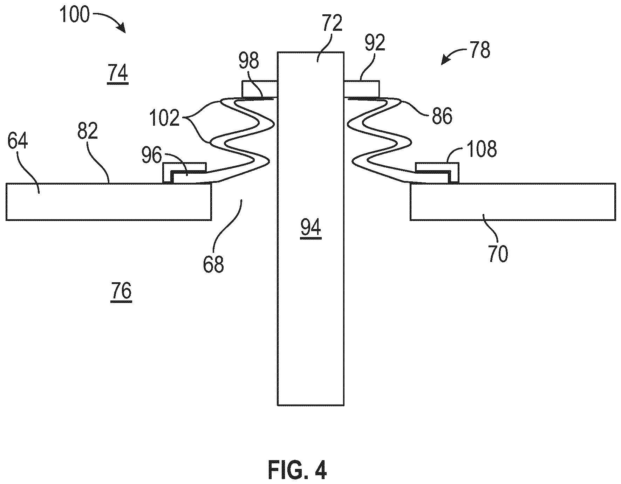

In another embodiment, as illustrated in FIG. 3, the second seal element 86 may be disposed or sandwiched between two first seal elements 84, which retain the second seal element 86. Another exemplary embodiment is illustrated in FIG. 4. In the embodiment of FIG. 4, the tube 72 includes a tube flange 92 extending radially outwardly from a tube body 94. The tube flange 92 is disposed at the case exterior 74 and in some embodiments is formed integral with the tube body 94. The second seal element 86, formed from a moldable silicone rubber material configured for operation in high temperature conditions, is configured as a boot. The second seal element 86 has a seal base 96 secured to the case wall outer surface 82, and a seal tip 98 secured to the tube flange 92. In some embodiments, the seal element 86 is secured to the case wall outer surface 82 and/or the tube flange 92 via an adhesive or one or more mechanical fasteners. As illustrated in FIG. 4, in one embodiment, the seal base 96 is secured to the case wall outer surface 82 by an outer case ring 108 disposed at the case wall outer surface 82. Between the seal base 96 and the seal tip 98, the second seal element 86 includes a seal body 100 having a plurality of undulations 102 extending, in some embodiment, in a direction generally along a tube length direction 104. In some embodiments, the each of the undulations 102 are identical in size and/or shape, while in other embodiments the size and/or shape of the undulations 102 varies along the length direction.104. In some embodiments a seal body thickness 106 is constant along the seal body 100, while in other embodiments the seal body thickness 106 varies along the seal body 100.

Use of the seal element 86 formed from a moldable silicone rubber material configured for operation in high temperature conditions in the seal assembly 78 prevents undesired leakage of airflow around the tube 72, while also preventing wear of the case opening 68 and/or the tube 72 due to relative movement of the tube 72 relative to the case opening 68.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A seal arrangement (78) for a gas turbine engine (20), comprising:
a seal carrier (80);
at least one seal element (84, 86) secured at the seal carrier (80), the at least one seal element (84, 86) formed from a moldable silicone rubber material configured for operation in temperature conditions equal to or greater than 260°C (500°F), the at least one seal element (84, 86) disposed and configured to minimize airflow leakage between a first component (64) and a second component (72) while preventing wear of the first component (64) and the second component (72).

2. The seal arrangement of claim 1, wherein the at least one seal element (84, 86) is configured to have an interference fit to one of the first component (64) or the second component (72).

3. The seal arrangement of claim 1 or 2, wherein the at least one seal element (84, 86) includes:
a first seal element (84) formed from a composite material and secured to the seal carrier (80); and
a second seal element (86) secured to the first seal element (84), the second seal element (86) formed from the moldable silicone rubber material.

4. The seal arrangement of claim 3, wherein the second seal element (86) is disposed between two first seal elements (84).

5. The seal arrangement of any preceding claim, wherein the at least one seal element (86) includes:
a seal base (96) secured to the first component (64);
a seal tip (98) secured to the second component (72); and
a seal body (100) extending between the seal base (96) and the seal tip (98), the seal body (100) including a plurality of undulations (102) extending along its length.

6. The seal arrangement of any preceding claim, wherein a thickness of the at least one seal element (84, 86) varies.

7. The seal arrangement of any preceding claim, wherein the at least one seal element (84) is formed as a single unitary unbroken ring configured to extend around the second component (72).

8. A case and tube arrangement of a gas turbine engine, comprising:
a case (64) having one or more case openings (68) extending therethrough from an exterior (74) of the case (64) to an interior (76) of the case;
a tube (72) extending through a case opening (68) of the one or more case openings (68); and
the seal assembly (78) of claim 1 or 2, wherein the case (64) is the first component (64) and the tube (72) is the second component (72), the at least one seal element (84, 86) extending between the case (64) and the tube (72) to seal between the case (64) and the tube (72) at the case opening (68).

9. The case and tube arrangement of claim 8, wherein the at least one seal element (86) is configured to have an interference fit to the tube (72).

10. The case and tube arrangement of claim 8 or 9, wherein the at least one seal element (84, 86) includes:
a first seal element (84) formed from a composite material and secured to the seal carrier (80); and
a second seal element (86) secured to the first seal element (84), the second seal element (86) formed from the moldable silicone rubber material.

11. The case and tube arrangement of claim 10, wherein the second seal element (86) is disposed between two first seal elements (84).

12. The case and tube arrangement of any of claims 8 to 11, wherein the at least one seal element (86) includes:
a seal base (96) secured to the case (64);
a seal tip (98) secured to the tube (72); and
a seal body (100) extending between the seal base (96) and the seal tip (98), the seal body (100) including a plurality of undulations (102) extending along its length.

13. The case and tube arrangement of any of claims 8 to 12, wherein a thickness of the at least one seal element (84, 86) varies.

14. The case and tube arrangement of any of claims 8 to 13, wherein the at least one seal element (84) is formed as a single unitary unbroken ring configured to extend around the tube (72).

15. A gas turbine engine (20), comprising:
a combustor (56) configured to combust a mixture of air and fuel;
a turbine (54) driven by combustion products flowed from the combustor (56); and
the case and tube arrangement of any of claims 8 to 14
